# EUROPEAN PATENT SPECIFICATION

(11) **EP 3 879 095 B1**
(45) Date of publication and mention of the grant of the patent: **28.06.2023**
(21) Application number: 20161895.6
(22) Date of filing: 09.03.2020
(51) Int. Cl.: F03D 13/20, F03D 80/50, F03D 80/80

(54) **WIND TURBINE**
WINDTURBINE
ÉOLIENNE

(43) Date of publication of application: 15.09.2021
(73) Proprietor: Siemens Gamesa Renewable Energy A/S, 7330 Brande (DK)
(72) Inventor: Gaard, Jesper, 5260 Odense S (DK); Gagein, Amandeep, 123110 Haryana (IN); Pedersen, Frederik Sig, 8000 Aarhus C (DK); Rasmussen, Ejvin, 5500 Middelfart (DK); Sendwal, Vipin, 131001 Haryana (IN)
(74) Representative: SGRE-Association

(56) References cited:
- EP-A1- 3 438 449
- EP-A1- 3 502 353
- WO-A1-2013/182205
- US-A1- 2011 221 205

## Description

The present invention relates to a wind turbine.

A wind turbine has a tower, a nacelle, which is arranged on top of the tower, a hub with rotor blades being rotatable supported at the nacelle and a generator being provided inside the nacelle and being driven by the hub. Inside the tower can be arranged electrical equipment like a switch gear. To connect the wind turbine to an electrical grid, an array cable is used. Since the array cable is very stiff and the space inside the tower is limited, it is challenging to connect the array cable to the switch gear.

EP 3 438 449 A1 describes a self-supporting support structure for wind turbine equipment. The support structure can be accommodated in a hollow transition piece for connecting a tower of an offshore wind turbine to a foundation pile, or in a foundation pile itself. The support structure comprises two or more floors placed vertically above each other and supported by upright supports. At least one floor connects substantially fittingly to an internal peripheral wall of the transition piece or the foundation pile, and said floor is provided with means for reducing its surface area, for instance foldable edge parts.

EP 3 502 353 A1 describes a foundation building system for an offshore wind turbine, whereby a monopile to be placed on the seabed, having an upper portion with a first attachment interface for attaching a foundation platform unit, at least one internal, second attachment interface in an interior cavity of the monopile for attaching at least one electrical platform unit, and a third attachment interface for attaching a tower of the offshore wind turbine atop the at least one electrical platform unit, wherein the upper portion is to be placed at least partly above sea level, the foundation platform unit providing at least one foundation platform extending around the tower when installed, and the at least one electrical platform unit comprising at least one platform for electrical equipment for guiding and/or connecting of an connection cable for connecting the offshore wind turbine.

WO 2013/182205 A1 describes a wind turbine including a tower, a rotor supported at an upper end of the tower, a generator, a transformer for increasing the voltage output of the generator prior to supplying a collector grid, and a switchgear arranged between the transformer and the collector grid. The switchgear includes a first switching device associated with the transformer, and a second switching device associated with one or more cables connecting the wind turbine to another wind turbine in the collector grid. The first switching device is connected to, but located remotely from, the second switching device.

US 2011/221205 A1 describes a device including rigid connecting bars for conductively connecting first to second busbars, the contact sides of which run parallel to each other and which can be held together with the connecting bars by applying pressure with the help of a first and a second connecting mechanism, each of which has a connecting bolt extending transverse to the contact sides.

It is one object of the present invention to provide an improved wind turbine.

Accordingly, a wind turbine, comprising a tower, a switch gear, which is arranged inside the tower, a suspension structure for a hanging suspension of the switch gear in the tower, and a platform, on which the switch gear is arranged, is provided. The platform has movable platform plates, which are openable for guiding an array cable through the platform to the switch gear. The suspension structure has a carrying unit that supports the switch gear from below.

In this way, the suspension structure suspends the switch gear from above. A load carrying structure around the switch gear can thus be prevented. This enables a direct mounting of the array cable into the switch gear. The installation process of the array cable can thus be optimized.

"Switch gear" in this context means an electric and/or electronic component that is part of an electric power system. The switch gear can be composed of electrical disconnect switches, fuses or circuit breakers used to control, protect and isolate electrical equipment. The switch gear can be used both to de-energize equipment to allow work to be done and to clear faults downstream.

The wind turbine comprises a nacelle that is mounted on or at the tower. Rotor blades are connected to a hub that is supported at the nacelle. A generator is placed inside the nacelle. The generator is connected to the hub. The generator is coupled to the switch gear. The switch gear is supported inside the tower. For this purpose, the suspension structure is provided. "Hanging suspension" in this context preferably means that the suspension structure is hooked into the tower. That means, the switch gear is supported from above by means of the suspension structure. A support from below is not necessary.

The switch gear is arranged on the platform. However, the platform does preferably not support the weight of the switch gear. The weight of the switch gear is carried by the suspension structure. "Movable" platform plates in this context means that the platform plates can be removed from the platform or can be pivoted around a rotation axis. The platform plates can also be named foldable or pivotable platform plates. The platform plates can be closed as soon as the array cable is guided through the platform.

Preferably, the wind turbine has a foundation and a transition piece that is arranged between the foundation and the tower and connects the tower to the foundation. Preferably, the switch gear is arranged inside the transition piece. In particular, the platform is also arranged inside the transition piece. Preferably, the suspension structure is suitable for a hanging suspension of the switch gear in the transition piece.

According to an embodiment, the movable platform plates are pivotable from a closed state into an open state and vice versa.

This means, the platform plates can be opened and closed as often as needed. The platform plates can be folded from the closed state into the open state and vice versa.

The suspension structure has a carrying unit that supports the switch gear from below.

The carrying unit preferably has two beams that are arranged parallel to each other. The beams carry the switch gear. The switch gear is placed on the beams.

According to a further embodiment, the tower has a foundation, a plurality of tower sections and a transition piece that is arranged between the foundation and a lowest tower section, wherein the switch gear is arranged inside the transition piece.

The number of tower sections is arbitrary. Besides the lowest tower section, a topmost tower section is provided. The topmost tower section carries the nacelle. The tower sections are attached to each other. The foundation can be anchored in the seabed.

According to a further embodiment, the suspension structure is suspended in the transition piece.

In particular, the suspension structure is supported only in or at the transition piece. Preferably, the suspension structure is hooked into the transition piece.

According to a further embodiment, the wind turbine further comprises a platform arrangement that comprises the suspension structure, the platform and a flange that is connected to the transition piece.

Preferably, the flange has a circular shape. The flange is connected to an upper edge of the transition piece. The platform is a lower platform of the platform arrangement. Apart from the lower platform, the platform arrangement has an upper platform that is arranged close to the flange.

According to a further embodiment, the platform arrangement comprises support beams that run along a longitudinal direction of the tower, wherein the support beams are coupled to the suspension structure and to the flange.

The support beams can be welded or bolted to the suspension structure. The longitudinal direction is oriented from the topmost tower section toward the foundation.

According to a further embodiment, the support beams are coupled to the flange by means of attachment elements.

Preferably, each support beam has an attachment element. That means that the number of support beams is the same as the number of attachment elements. The attachment element can be connected to the support beams and the flange in a hinged manner.

According to a further embodiment, the suspension structure comprises beams that run along the longitudinal direction and beams that run perpendicular to the longitudinal direction, wherein at least some of the beams that run perpendicular to the longitudinal direction are connected to the support beams.

The beams that run perpendicular to the support beams can be welded or bolted to the support beams. The beams that run along the longitudinal direction and the support beams are preferably arranged parallel to each other.

According to a further embodiment, the platform arrangement comprises a platform structure that carries the platform and that is connected to the support beams.

The platform structure can have a circular shape. The support beams carry the platform structure.

According to a further embodiment, the platform arrangement comprises an upper platform that is arranged parallel to and in a distance from the platform.

The upper platform is arranged close to the flange. The platforms are arranged parallel to each other.

According to a further embodiment, the upper platform comprises a pull in frame for pulling in the array cable.

The pull in frame is preferably connected to a platform structure of the upper platform.

According to a further embodiment, the platform arrangement comprises a platform structure that carries the upper platform and that is connected to the support beams.

The support beams carry the platform structure. The platform structure can be made of a plurality of beams.

According to a further embodiment, the array cable has a connector, in particular a T-connector, that is connectable to the switch gear.

Preferably, the array cable is part of the wind turbine. By means of the array cable, the wind turbine can be connected to an electrical grid.

According to a further embodiment, the wind turbine further comprises a gastight platform that is arranged below the platform, wherein the array cable is guided through the gastight platform in a gastight manner.

The gastight platform prevents gas from entering the tower from the seabed.

Further embodiments, features and advantages of the present invention will become apparent from the subsequent description and dependent claims, taken in conjunction with the accompanying drawings, in which:
- Fig. 1: shows a perspective view of a wind turbine according to one embodiment;
- Fig. 2: shows a perspective view of a wind turbine rotor blade according to one embodiment;
- Fig. 3: shows a further perspective view of the wind turbine according to Fig. 1;
- Fig. 4: shows a perspective view of a platform arrangement according to one embodiment;
- Fig. 5: shows a further perspective view of the platform arrangement according to Fig. 4;
- Fig. 6: shows a further perspective view of the platform arrangement according to Fig. 4;
- Fig. 7: shows a further perspective view of the platform arrangement according to Fig. 4;
- Fig. 8: shows a further perspective view of the platform arrangement according to Fig. 4; and
- Fig. 9: shows a further perspective view of the platform arrangement according to Fig. 4.

In the Figures, like reference numerals designate like or functionally equivalent elements, unless otherwise indicated.

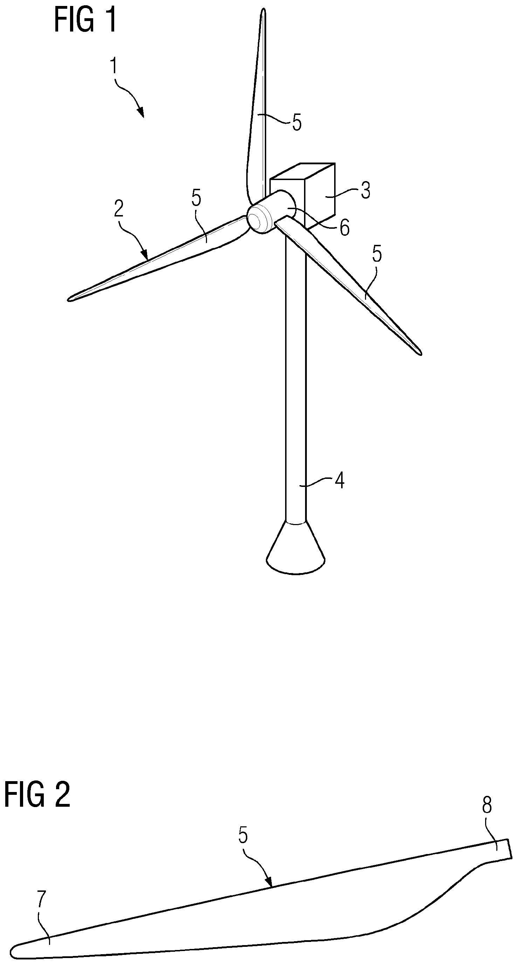

Fig. 1 shows a wind turbine 1 according to one embodiment.

The wind turbine 1 comprises a rotor 2 connected to a generator (not shown) arranged inside a nacelle 3. The nacelle 3 is arranged at the upper end of a tower 4 of the wind turbine 1. The tower 4 has a plurality of tower sections that are arranged on top of each other. The tower 4 can be named wind turbine tower.

The rotor 2 comprises three rotor blades 5. The rotor blades 5 are connected to a hub 6 of the wind turbine 1. Rotors 2 of this kind may have diameters ranging from, for example, 30 to 160 meters or even more. The rotor blades 5 are subjected to high wind loads. At the same time, the rotor blades 5 need to be lightweight. For these reasons, rotor blades 5 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

Fig. 2 shows a rotor blade 5 according to one embodiment.

The rotor blade 5 comprises an aerodynamically designed portion 7, which is shaped for optimum exploitation of the wind energy and a blade root 8 for connecting the rotor blade 5 to the hub 6.

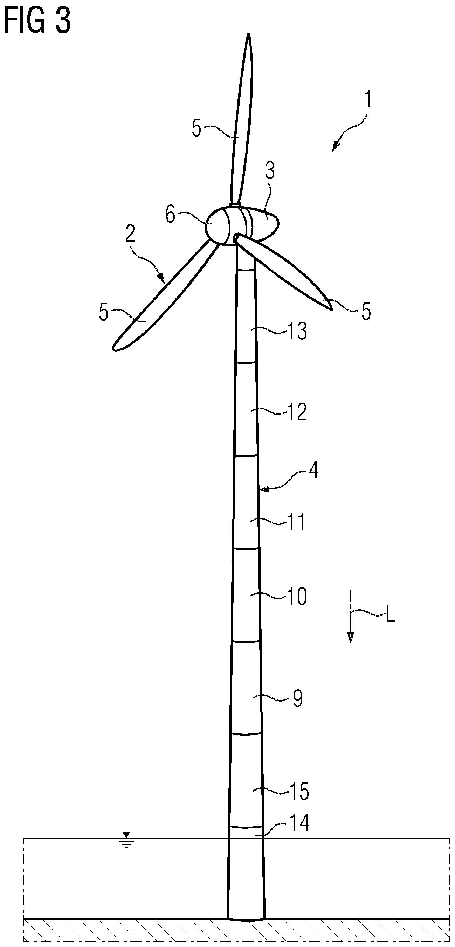

Fig. 3 shows again the wind turbine 1 according to Fig. 1.

As mentioned before, the tower 4 has a plurality of tower sections 9 to 13 that are arranged on top of each other. The number of tower sections 9 to 13 is arbitrary. The tower 4 has a lowest tower section 9 and a topmost tower section 13. The nacelle 3 can be attached to the topmost tower section 13. The wind turbine 1 has a foundation 14 that can be anchored in the seabed. Between the foundation 14 and the lowest tower section 9 is arranged a transition piece 15.

The transition piece 15 is a circular or tubular piece that connects the tower 4 to the foundation 14. Thereby, the transition piece 15 forms a transition between the foundation 14 and the tower 4. An external platform (not shown) can be attached to the transition piece 14. The tower 4 has a longitudinal direction L. The longitudinal direction L is oriented from the topmost tower section 13 toward the foundation 14. However, the longitudinal direction L can be oriented vice versa.

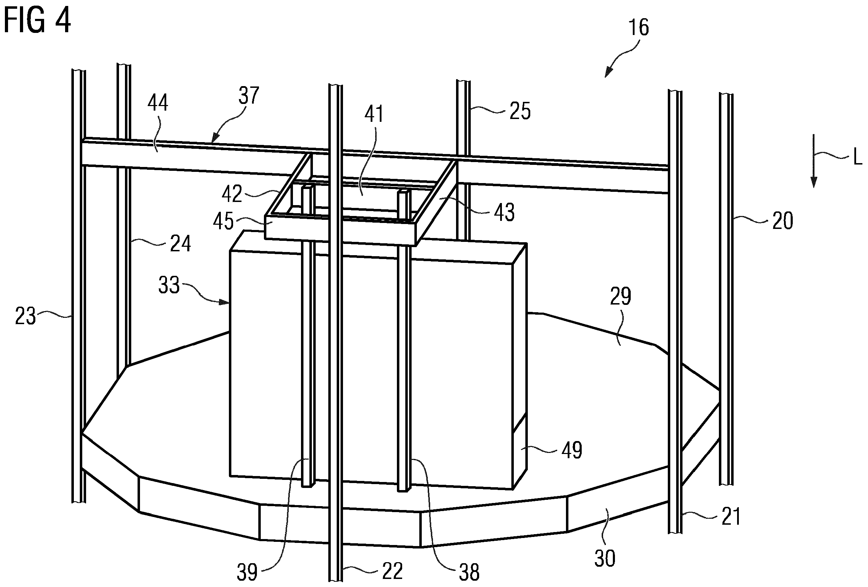

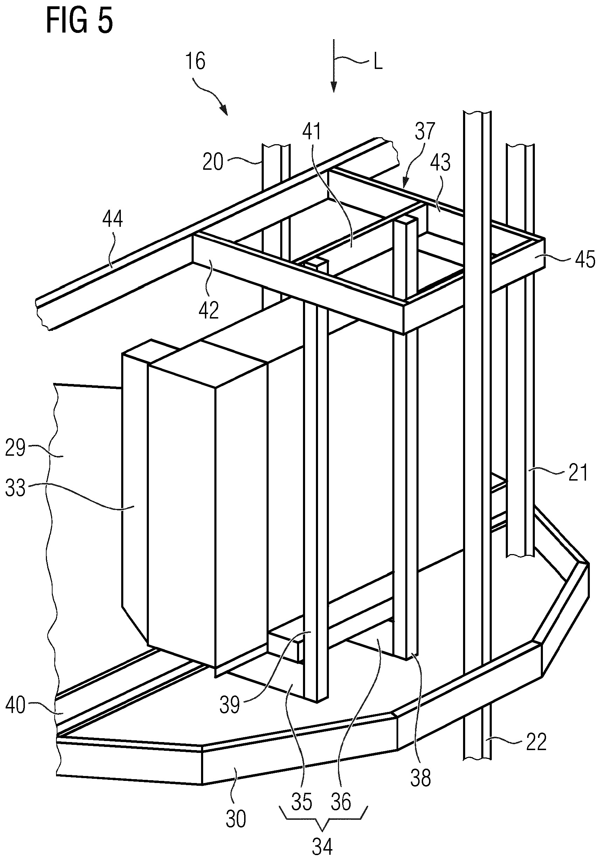

Figs. 4 to 9 show a platform arrangement 16 according to one embodiment.

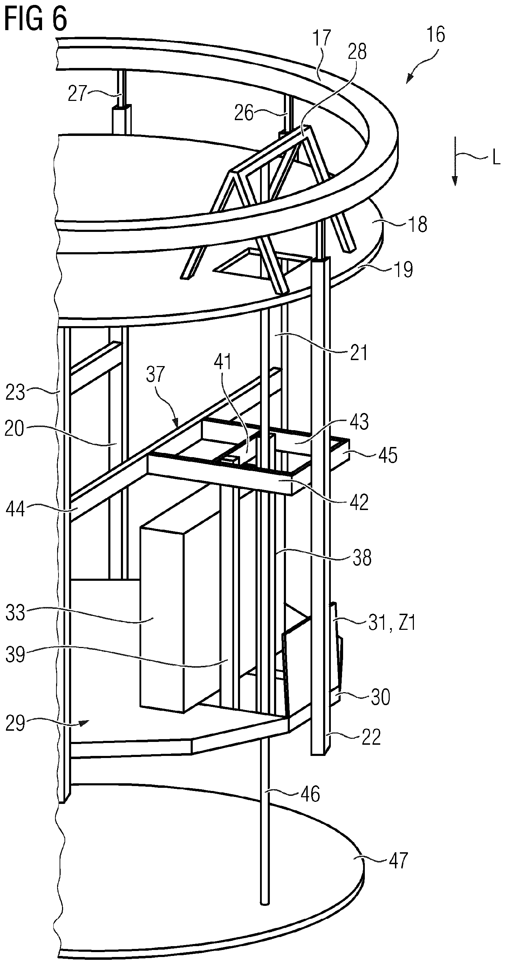

The platform arrangement 16 is arranged inside the transition piece 15. The platform arrangement 16 has a circular flange 17 (Fig. 6) that is attached to an upper edge of the transition piece 15. In this way, the platform arrangement 16 is suspended in the transition piece 15.

An upper platform 18 (Fig. 6) is arranged below the flange 17. The upper platform 18 is arranged inside the transition piece 15. The upper platform 18 has a platform structure 19 that supports the upper platform 18. The platform structure 19 is connected to support beams 20 to 25. The support beams 20 to 25 run along the longitudinal direction L of the tower 4.

The support beams 20 to 25 are connected to the flange 17 by means of attachment elements 26, 27 (Fig. 6). Preferably, the number of attachment elements 26, 27 is the same as the number of support beams 20 to 25. A pull in frame 28 is temporary mounted at the upper platform 18 or at the platform structure 19. The pull in frame 28 could be a strong attachment point in a cover of the transition piece 15 as well.

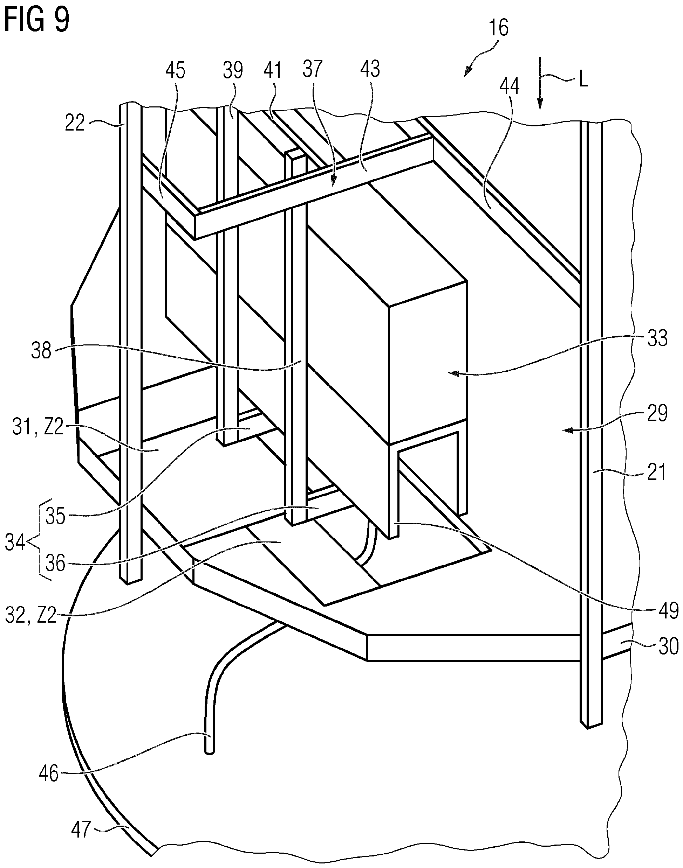

The platform arrangement 16 also has a lower platform 29. The lower platform 29 is supported by means of a platform structure 30. The platform structure 30 is attached to the support beams 20 to 25. The lower platform 29 has a plurality of hatches or foldable platform plates 31, 32. The platform plates 31, 32 can be removed from the lower platform 29 and/or pivoted toward the lower platform 29. In particular, the platform plates 31, 32 can be pivoted or folded from an open state Z1 (Figs. 6, 7 and 8) into a closed state Z2 (Fig. 9) .

A switch gear 33 is arranged above the lower platform 29. The switch gear 33 is supported by means a carrying unit 34. The carrying unit 34 consists of two beams 35, 36 that are arranged perpendicular to the support beams 20 to 25. The carrying unit 34 is attached to a suspension structure 37. The carrying unit 34 is part of the suspension structure 37. The suspension structure 37 consists of two beams 38, 39 that are attached to the beams 35, 36. The beams 35, 36 can also be attached to a beam 40 of the platform structure 30.

The beams 38, 39 are attached to a further beam 41 of the suspension structure 37. The beam 41 is arranged in a distance from the beam 40. The beam 41 is connected to two beams 42, 43 that run perpendicular to the beam 41. The beams 42, 43 are connected to two further beams 44, 45. The beam 44 is attached to the support beams 21, 23. The beam 45 is connected to the support beam 22.

In this way, the carrying unit 34 and the suspension structure 37 suspend the switch gear 33 from above, namely from the flange 17. The carrying unit 34 and the suspension structure 37 make one side of the switch gear 33 suspended from above. A load carrying structure around the switch gear 33 is prevented. This enables a direct mounting of an array cable 46 into the switch gear 33. The installation process of the array cable 46 can be optimized.

The function of the platform arrangement 16 is as follows. As can be seen from Figs. 6 to 9, there is arranged an gastight platform 47 below the lower platform 29. The array cable 46 is guided through the gastight platform 47 in a gastight manner. The array cable 46 is pulled from the gastight platform 47 to the top of the transition piece 15. The pull in frame 28 can be used for this purpose. This can be carried out next to the switch gear 33 by folding up or removing the platform plates 31, 32 into the open state Z1.

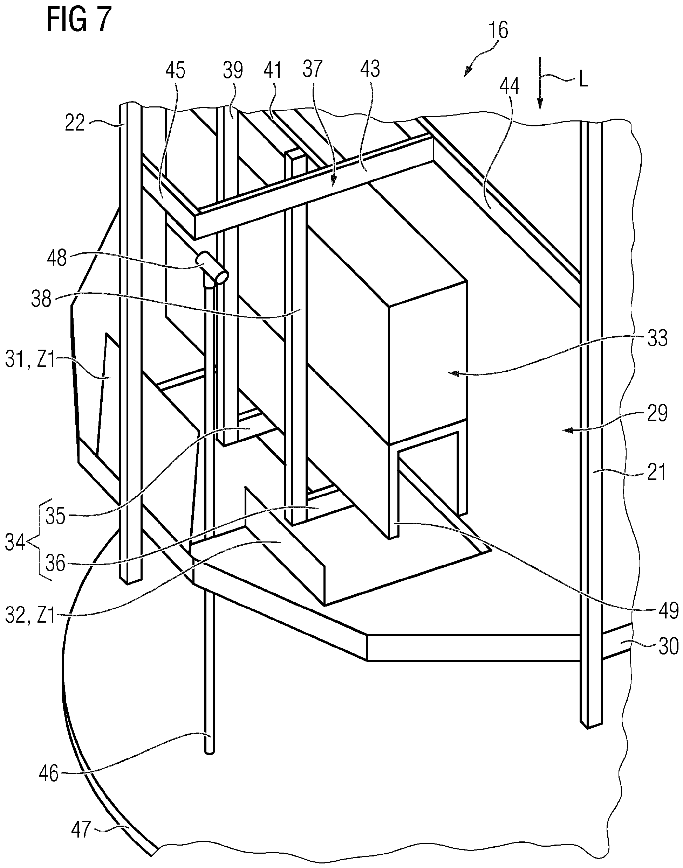

Once the array cable 46 has been pulled in and needs to be installed in the switch gear 33, the foldable platform plates 31, 32 are folded up into the open state Z1 can thereby making space for direct routing of the array cable 46 (Fig. 7). For connecting the array cable 46 to the switch gear 33, a connector 48, in particular a T-connector, is provided.

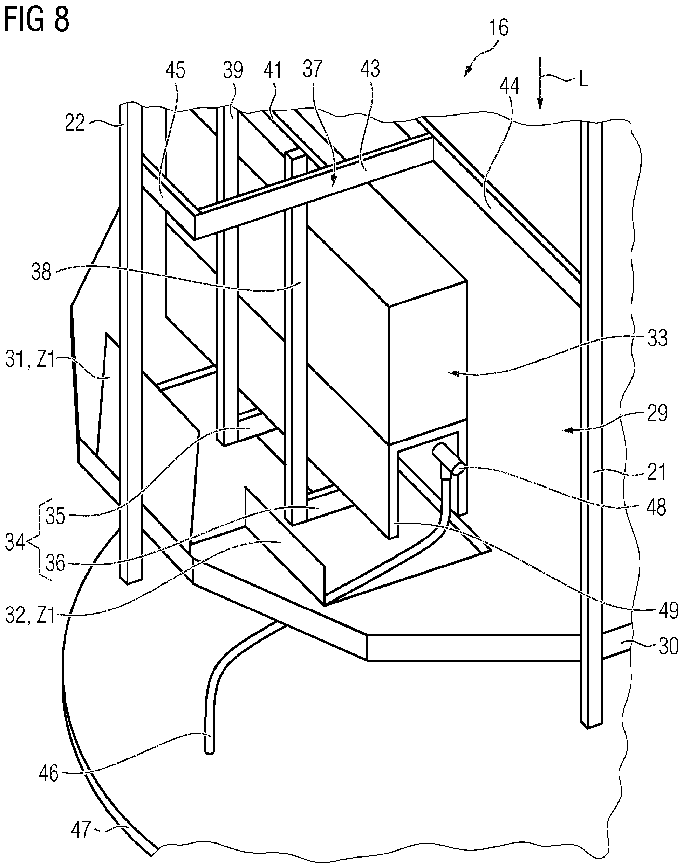

The array cable 46 with the connector 48 can then be guided toward a compartment 49 of the switch gear 33 (Fig. 8). Since the platform plates 31, 32 are folded upwards, the array cable 46 with the connector 48 can be routed to the compartment 49 without having any obstacles that block the array cable 46.

When the connector 48 of the array cable 46 is finally installed in the switch gear 33, the platform plates 31, 32 can be closed one by one (Fig. 9). Hence, with the closed platform plates 31, 32 it is ensured that the lower platform 29 is again accessible.

The design of the platform arrangement 16 can be used for any platform of the tower 4. The design could also be rotated around the switch gear 33 together with the switch gear 33 for 180° towards the center of the transition piece 15. By that, a center pull of the array cable 46 would be possible and the interface would be more common. Also the top of the switch gear 33 could be used to connect it to the suspension structure 37. The carrying unit 34 below the switch gear would then be expendable. This results in more space for routing the array cable 46.

Although the present invention has been described in accordance with preferred embodiments, it is obvious for the person skilled in the art that modifications are possible in all embodiments.

## Claims

1. A wind turbine (1), comprising a tower (4), a switch gear (33), which is arranged inside the tower (4), a suspension structure (37) for a hanging suspension of the switch gear (33) in the tower (4), and a platform (29), on which the switch gear (33) is arranged, wherein the platform (29) has movable platform plates (31, 32), which are openable for guiding an array cable (46) through the platform (29) to the switch gear (33), and wherein the suspension structure (37) has a carrying unit (34) that supports the switch gear (33) from below.

2. The wind turbine according to claim 1, wherein the movable platform plates (31, 32) are pivotable from a closed state (Z2) into an open state (Z1) and vice versa.

3. The wind turbine according to claim 1 or 2, wherein the tower (4) has a foundation (14), a plurality of tower sections (9 - 13) and a transition piece (15) that is arranged between the foundation (14) and a lowest tower section (9), wherein the switch gear (33) is arranged inside the transition piece (15).

4. The wind turbine according to claim 3, wherein the suspension structure (37) is suspended in the transition piece (15) .

5. The wind turbine according to claim 3 or 4, further comprising a platform arrangement (16) that comprises the suspension structure (37), the platform (29) and a flange (17) that is connected to the transition piece (15).

6. The wind turbine according to claim 5, wherein the platform arrangement (16) comprises support beams (20 - 25) that run along a longitudinal direction (L) of the tower (4), wherein the support beams (20 - 25) are coupled to the suspension structure (37) and to the flange (17).

7. The wind turbine according to claim 6, wherein the support beams (20 - 25) are coupled to the flange (17) by means of attachment elements (26, 27).

8. The wind turbine according to claim 6 or 7, wherein the suspension structure (37) comprises beams (38, 39) that run along the longitudinal direction (L) and beams (41 - 45) that run perpendicular to the longitudinal direction (L), wherein at least some of the beams (41 - 45) that run perpendicular to the longitudinal direction (L) are connected to the support beams (20 - 25).

9. The wind turbine according to one of claims 5 - 8, wherein the platform arrangement (16) comprises a platform structure (30) that carries the platform (29) and that is connected to the support beams (20 - 25).

10. The wind turbine according to one of claims 5 - 9, wherein the platform arrangement (16) comprises an upper platform (18) that is arranged parallel to and in a distance from the platform (29).

11. The wind turbine according to claim 10, wherein the upper platform (18) comprises a pull in frame (28) for pulling in the array cable (46).

12. The wind turbine according to claim 10 or 11, wherein the platform arrangement (16) comprises a platform structure (19) that carries the upper platform (18) and that is connected to the support beams (20 - 25).

13. The wind turbine according to one of claims 1 - 12, wherein the array cable (46) has a connector (48), in particular a T-connector, that is connectable to the switch gear (33) .

14. The wind turbine according to one of claims 1 - 13, further comprising a gastight platform (47) that is arranged below the platform (29), wherein the array cable (46) is guided through the gastight platform (47) in a gastight manner.

## Patentansprüche

1. Windkraftanlage (1), einen Turm (4), eine Schaltanlage (33), die im Inneren des Turms (4) angeordnet ist, eine Aufhängungsstruktur (37) für eine hängende Aufhängung der Schaltanlage (33) in dem Turm (4) und eine Plattform (29), auf der die Schaltanlage (33) angeordnet ist, umfassend, wobei die Plattform (29) bewegliche Plattformplatten (31, 32) aufweist, die geöffnet werden können, um ein Array-Kabel (46) durch die Plattform (29) zu der Schaltanlage (33) zu führen, und wobei die Aufhängungsstruktur (37) eine Tageeinheit (34) aufweist, welche die Schaltanlage (33) von unten abstützt.

2. Windkraftanlage nach Anspruch 1, wobei die beweglichen Plattformplatten (31, 32) aus einem geschlossenen Zustand (Z2) in einen geöffneten Zustand (Z1) und umgekehrt drehbar sind.

3. Windkraftanlage nach Anspruch 1 oder 2, wobei der Turm (4) ein Fundament (14), mehrere Turmabschnitte (9-13) und ein Übergangsstück (15) aufweist, das zwischen dem Fundament (14) und einem untersten Turmabschnitt (9) angeordnet ist, wobei die Schaltanlage (33) im Inneren des Übergangsstücks (15) angeordnet ist.

4. Windkraftanlage nach Anspruch 3, wobei die Aufhängungsstruktur (37) in dem Übergangsstück (15) aufgehängt ist.

5. Windkraftanlage nach Anspruch 3 oder 4, ferner eine Plattformanordnung (16) umfassend, welche die Aufhängungsstruktur (37), die Plattform (29) und einen Flansch (17) umfasst, der mit dem Übergangsstück (15) verbunden ist.

6. Windkraftanlage nach Anspruch 5, wobei die Plattformanordnung (16) Stützbalken (20-25) umfasst, die in einer Längsrichtung (L) des Turms (4) verlaufen, wobei die Stützbalken (20-25) mit der Aufhängungsstruktur (37) und dem Flansch (17) gekoppelt sind.

7. Windkraftanlage nach Anspruch 6, wobei die Stützbalken (20-25) mittels Anbringungselementen (26, 27) mit dem Flansch (17) gekoppelt sind.

8. Windkraftanlage nach Anspruch 6 oder 7, wobei die Aufhängungsstruktur (37) Balken (38, 39) umfasst, die in der Längsrichtung (L) verlaufen, und Balken (41-45), die senkrecht zu der Längsrichtung (L) verlaufen, wobei mindestens einige der Balken (41-45), die senkrecht zu der Längsrichtung (L) verlaufen, mit den Stützbalken (20-25) verbinden sind.

9. Windkraftanlage nach einem der Ansprüche 5 bis 8, wobei die Plattformanordnung (16) eine Plattformstruktur (30) umfasst, welche die Plattform (29) trägt und die mit den Stützbalken (20-25) verbunden ist.

10. Windkraftanlage nach einem der Ansprüche 5 bis 9, wobei die Plattformanordnung (16) eine obere Plattform (18)umfasst, die parallel und in einem Abstand zu der Plattform (29) angeordnet ist.

11. Windkraftanlage nach Anspruch 10, wobei die obere Plattform (18) ein Einzugsgestell (28) umfasst, um das Array-Kabel (46) einzuziehen.

12. Windkraftanlage nach Anspruch 10 oder 11, wobei die Plattformanordnung (16) eine Plattformstruktur (19) umfasst, welche die obere Plattform (18) trägt und die mit den Stützbalken (20-25) verbunden ist.

13. Windkraftanlage nach einem der Ansprüche 1 bis 12, wobei das Array-Kabel (46) einen Verbinder (48) aufweist, insbesondere einen T-Verbinder, der mit der Schaltanlage (33) verbindbar ist.

14. Windkraftanlage nach einem der Ansprüche 1 bis 13, ferner eine gasdichte Plattform (47) umfassend, die unter der Plattform (29) angeordnet ist, wobei das Array-Kabel (46) in einer gasdichten Weise durch die gasdichte Plattform (47) geführt ist.

## Revendications

1. Éolienne (1) comprenant un mât (4), un appareil de commutation (33) disposé à l'intérieur du mât (4), une structure de suspension (37) pour suspendre l'appareil de commutation (33) dans le mât (4), et une plate-forme (29) sur laquelle est disposé l'appareil de commutation (33), dans laquelle la plate-forme (29) possède des plaques mobiles de plate-forme (31, 32), qui peuvent être ouvertes pour guider un câble de réseau (46) à travers la plate-forme (29) jusqu'à l'appareil de commutation (33), et dans laquelle la structure de suspension (37) possède une unité de support (34) qui soutient l'appareil de commutation (33) par le bas.

2. Éolienne selon la revendication 1, dans laquelle les plaques mobiles de plate-forme (31, 32) peuvent pivoter d'un état fermé (Z2) à un état ouvert (Z1) et vice versa.

3. Éolienne selon la revendication 1 ou 2, dans laquelle le mât (4) a une fondation (14), une pluralité de sections de mât (9-13) et une pièce de transition (15) qui est disposée entre la fondation (14) et une section de mât inférieure (9), dans laquelle l'appareil de commutation (33) est disposé à l'intérieur de la pièce de transition (15).

4. Éolienne selon la revendication 3, dans laquelle la structure de suspension (37) est suspendue dans la pièce de transition (15).

5. Éolienne selon la revendication 3 ou 4 comprenant en outre un dispositif de plate-forme (16) qui comprend la structure de suspension (37), la plate-forme (29) et une bride (17) reliée à la pièce de transition (15).

6. Éolienne selon la revendication 5, dans laquelle le dispositif de plate-forme (16) comprend des poutres de soutien (20-25) qui s'étendent le long d'un sens longitudinal (L) du mât (4), dans laquelle les poutres de soutien (20-25) sont couplées à la structure de suspension (37) et à la bride (17).

7. Éolienne selon la revendication 6, dans laquelle les poutres de soutien (20-25) sont couplées à la bride (17) au moyen d'éléments de fixation (26, 27).

8. Éolienne selon la revendication 6 ou 7, dans laquelle la structure de suspension (37) comprend des poutres (38, 39) qui s'étendent le long du sens longitudinal (L) et des poutres (41-45) qui s'étendent perpendiculairement au sens longitudinal (L), dans laquelle au moins certaines des poutres (41-45) qui s'étendent perpendiculairement au sens longitudinal (L) sont reliées aux poutres de soutien (20-25).

9. Éolienne selon l'une des revendications 5 à 8, dans laquelle le dispositif de plate-forme (16) comprend une structure de plate-forme (30) qui porte la plate-forme (29) et qui est reliée aux poutres de soutien (20-25).

10. Éolienne selon l'une des revendications 5 à 9, dans laquelle le dispositif de plate-forme (16) comprend une plate-forme supérieure (18) qui est disposée parallèlement à la plate-forme (29) et à une certaine distance de celle-ci.

11. Éolienne selon la revendication 10, dans laquelle la plate-forme supérieure (18) comprend un cadre de traction (28) pour tirer le câble de réseau (46).

12. Éolienne selon la revendication 10 ou 11, dans laquelle le dispositif de plate-forme (16) comprend une structure de plate-forme (19) qui porte la plate-forme supérieure (18) et qui est reliée aux poutres de soutien (20-25).

13. Éolienne selon l'une des revendications 1 à 12, dans laquelle le câble de réseau (46) possède un connecteur (48), en particulier un connecteur en T, qui peut être connecté à l'appareil de commutation (33).

14. Éolienne selon l'une des revendications 1 à 13, comprenant en outre une plate-forme étanche aux gaz (47) disposée sous la plate-forme (29), dans laquelle le câble de réseau (46) est guidé à travers la plate-forme étanche aux gaz (47) de manière étanche aux gaz.
